# EUROPÄISCHE PATENTSCHRIFT

(11) **EP 0 645 937 B1**
(45) Veröffentlichungstag und Bekanntmachung des Hinweises auf die Patenterteilung: **24.11.1999**
(21) Anmeldenummer: 94113008.0
(22) Anmeldetag: 20.08.1994
(51) Int. Cl.: H04N 13/00, H04N 13/02, G02B 27/22

(54) **Bildwiedergabesystem, Verfahren zur Erzeugung einer Bilddarstellung und deren Verwendung**
Image reproduction system, method to generate an image representation and its use
Système de reproduction d'image, méthode pour générer une représentation d'image et son utilisation

(30) Priorität: 23.09.1993 DE 4332381
(43) Veröffentlichungstag der Anmeldung: 29.03.1995
(73) Patentinhaber: Carl Zeiss, 89518 Heidenheim (Brenz) (DE); CARL-ZEISS-STIFTUNG, HANDELND ALS CARL ZEISS, 89518 Heidenheim (Brenz) (DE)
(72) Erfinder: Teuchert, Wolf-Dieter, Dr., D-89551 Königsbronn (DE)

(56) Entgegenhaltungen:
- EP-A- 0 118 057
- EP-A- 0 342 419
- EP-A- 0 374 253
- US-A- 4 199 785
- US-A- 4 574 197
- US-A- 4 805 988
- US-A- 5 049 740
- PATENT ABSTRACTS OF JAPAN vol. 13 no. 246 (E-769) ,8.Juni 1989 & JP-A-01 047194 (MATSUSHITA ELECTRIC IND CO LTD) 21.Februar 1989,
- PATENT ABSTRACTS OF JAPAN vol. 10 no. 386 (E-467) [2443] ,24.Dezember 1986 & JP-A-61 177889 (NIPPON HOSO KYOKAI) 9.August 1986,

## Beschreibung

Die Erfindung betrifft ein Bildwiedergabesystem mit einem Bildaufnahmegerät mit zwei optischen Kanälen unterschied Sehfelder mit nahezu gleicher Visierlinie, einer Bildverarbeitungseinrichtung verarbeitungseinrichtung und einer die simultan Bildteile beider optischer Kanäle maßstabsgleich und zentriert zu einem Bild vereinigt darstellt. Ferner betrifft die Erfindung ein Verfahren zur Erzeugung einer Bilddarstellung, welches mit dem erfindungsgemäßen Bildwiedergabesystem ausgeführt werden kann, sowie die vorteilhafte Verwendung davon.

Gattungsgemäße Bildwiedergabesysteme sind bekannt. US 4 199 785 beschreibt ein elektronisches Zoomsystem mit zwei Kameras, die auch Wärmebildgeräte (FLIR) sein können, mit verschiedenem Sehfeld, deren Bilder mit verschiedenem Maßstab (Zoom) auf einem Monitor vereinigt dargestellt werden, wobei in einem mittleren Bildbereich die Daten der Kamera mit engem Sehfeld gezeigt werden, maßstabsgleich mit den am Rand anschließenden Daten des größeren Sehfelds. Die Kamera mit dem engen Sehfeld wird dabei so gesteuert, daß abhängig vom Darstellungsmaßstab auf dem Monitor nur so viele Pixel variabler Größe von dem ganzen Sehfeld aufgenommen werden, wie auf dem Monitor dargestellt werden können.

US 4 574 197 betrifft einen Sensor mit zwei Sehfeldern, ausgebildet als Wärmebildgerät mit einem Scanning-Spiegel, der zugleich in zwei verschiedenen Strahlengängen wirkt, und mit einem Detektor. Das Umschalten zwischen den Sehfeldern geschieht ohne Chopper durch die verschiedene Lage der Spiegelfacetten des Scanningspiegels, die in den beiden Strahlengängen benutzt werden, so daß jeder Kanal genau dann auf den Detektor abgebildet wird, wenn der andere aus dem Detektorbereich abgelenkt ist. Ausführungen als Stereogerät mit zwei Monitoren oder zwei helmmontierten Anzeigen (Helmet mounted display HMD) sind beschrieben, daneben eine Variante, bei der eine geräteinterne optische Anzeige dem erfaßten Wärmebild auf einem Monitor überlagert wird, z.B. um Panzerfahrern simultan einen Ausblick und eine Abstandsinformation zu bieten. Es werden also zwei unabhängige Bilder ohne gegenseitige Anpassung überlagert ohne nähere Angaben zur Art der Überlagerung.

US 5 049 740 beschreibt einen weiteren Sensor mit zwei Sehfeldern als Wärmebildgerät mit einem oszillierenden Spiegel, dessen Vorder- und Rückseite zum Scannen zweier verschiedener Sehfelder dienen. Die empfangenen Signale werden auf zwei separaten Displays angezeigt, oder auf einem einzigen Display, so daß zwei Infrarotbilder der zwei Szenen entstehen. Von einer Überlagerung der zwei Bilder auf einem Monitor ist dabei nicht die Rede.

EP 0 342 419 beschreibt eine Einrichtung und ein Verfahren zur Beobachtung einer Szene, insbesondere ein Wärmebildgerät, mit zwei Sehfeldern, das als Flugführungssystem geeignet ist. Auf einem Monitor wird in einem Bild, das dem weiten Sehfeld entspricht, ein Ausschnitt vergrößert dargestellt, der mit dem engen Sehfeld erfaßt wurde, und zwar zentriert zur Lage des Bildausschnitts im Gesamtbild. Dargestellt wird nur ein Ausschnitt des vom engen Sehfeld erfaßten Bilds. Damit entsteht kein einheitlicher Bildeindruck mit einheitlichem Maßstab und verbesserter Bildqualität in einem zentralen Bereich.

Die Darstellung hat vielmehr einen Sprung an der Grenze zwischen Bildausschnitt und Gesamtbild im Maßstab und eine Umgebung des Bildausschnitts wird in der Darstellung unterdrückt.

EP-A-0 118 057 beschreibt ein Bildwiedergabesystem mit nur einem Detektor für zwei optische Kanäle mit unterschiedlichen Sehfeldem, die aber nicht zu einem gemeinsamen Bild vereinigt werden.

Aufgabe der Erfindung ist es, ein gattungsgemäßes Bildwiedergabesystem, ein Bildaufnahmegerät dafür, ein entsprechendes Verfahren zur Erzeugung einer Bilddarstellung und deren Verwendung mit sparsamen Mitteln so auszubilden, daß für einen Beobachter ein Bild mit großem Sehfeld entsteht, welches in seinem zentralen Bereich eine erhöhte Auflösung und Reichweite aufweist, wobei ein einheitlicher Bildeindruck entstehen soll. Zugleich soll eine Stereoausführung problemlos möglich sein.

Gelöst wird die Aufgabe für ein gattungsgemäßes Bildwiedergabesystem durch die Merkmale des Anspruchs 1. Dadurch, daß die dargestellten Bildteile alle ihnen zugeordneten vom Bildaufnahmegerät erfaßbaren Daten zur Darstellung ausnutzen, d.h. wenn die Zahl der erfaßten Pixel größer ist als die Zahl der auf der Bilddarstellungseinrichtung zur Verfügung stehenden Pixel, wird durch Bildkompression unter Nutzung aller erfaßten Pixel eine Anpassung erreicht. Weiter enthält das Bildaufnahmegerät einen gemeinsamen Detektor für die zwei optischen Kanäle.

Das Bildaufnahmegerät ist dabei vorzugsweise als Wärmebildaufnahmegerät ausgeführt und;enthält eine Scanningeinrichtung und einen Zeilendetektor und detektiert die zwei optischen Kanäle zeitlich abwechselnd. Diese Ausführungsmerkmale können einzeln und in Kombination realisiert werden.

Gemäß Anspruch 5 ist eine Stereoausführung mit zwei mal zwei optischen Kanälen vorgesehen, welche vorteilhaft (nach Anspruch 6) nur eine einzige Scanningeinrichtung und einen Zeilendetektor zeitlich alternierend verwenden.

Einen besonders einfachen Aufbau erreicht man durch Verwendung nur einer einzigen Scanningeinrichtung, die gemäß Anspruch 7 in einem vereinigten Strahlengang für alle optischen Kanäle angeordnet ist.

Der Zeilendetektor hat am besten für jede Zeile, die insgesamt erfaßt wird, ein Detektorelement, so daß ein nur eindimensionales Scanning ohne Erzeugung eines Zeilensprungs möglich wird.

Ein Verfahren zur Erzeugung einer Bilddarstellung einer Szene mit einem zentralen Bereich erhöhter Auflösung und/oder reduzierten Rauschens und mit einheitlichem Maßstab ist Gegenstand des Anspruchs 9 und, ergänzt für die Stereodarstellung, des Anspruchs 10. Dieses Verfahren erlaubt mit einfachen Mitteln, insbesondere mit einem Bildwiedergabesystem nach den vorausgehenden Ansprüchen, eine physiologisch für das Auge gut verträgliche ausreichend schnelle Echtzeitdarstellung eines Bildes mit gesteigerter Qualität in einem zentralen Bereich, wo auch die Wahrnehmung des Auges gegenüber dem Rand besser ist.

Besonders vorteilhafte Verwendung finden schließlich das Bildwiedergabesystem, das Bildaufnahmegerät und das Verfahren der Ansprüche 1 bis 10 als Sichtgerät, insbesondere Nachtsichtgerät für Fahrzeugführer, wobei insbesondere Piloten von Hubschraubern und anderem Fluggerät in Frage kommen.

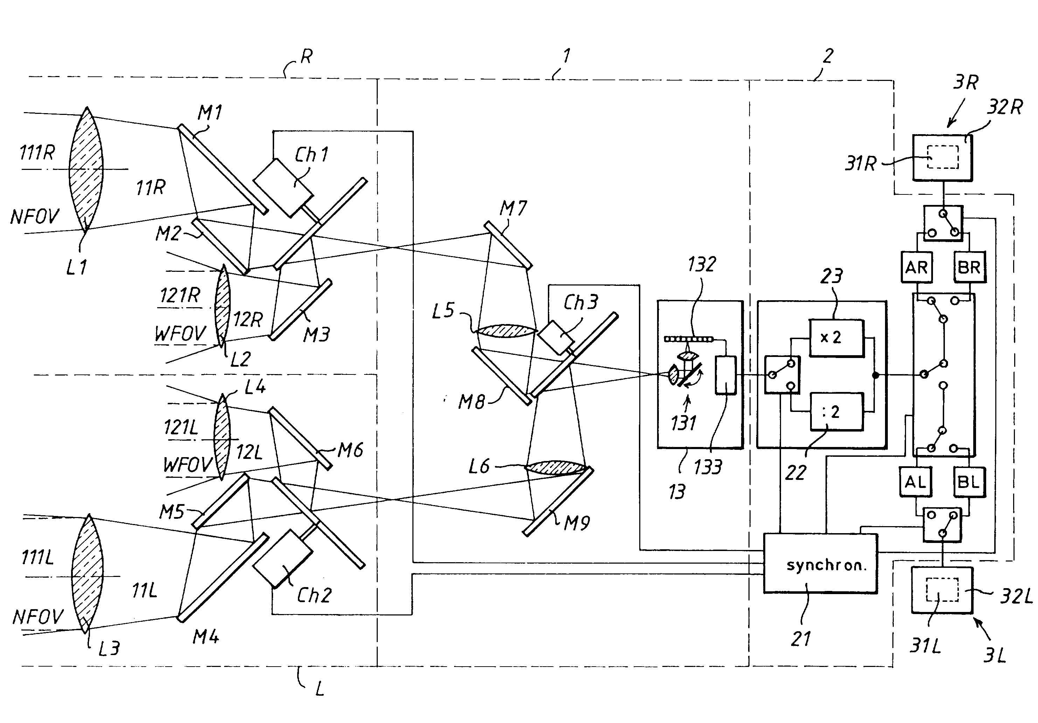

Näher erläutert wird die Erfindung anhand des in der Zeichnung dargestellten Beispiels.

Die Figur zeigt schematisch ein modular aufgebautes Bildwiedergabesystem in Stereoausführung. Das Bildwiedergabesystem besteht aus einem Bildaufnahmegerät (1), einer Bildverarbeitungseinrichtung (2) und der Bilddarstellungseinrichtung, dargestellt als zwei Videomonitore 3R und 3L für die beiden Stereobilder. Als Bilddarstellungseinrichtung geeignet sind gerade für die Verwendung im Hubschrauber und dergleichen auch Head-up-displays (HUD) und am Helm befestigte Darstellungseinrichtungen (Helmet-mounted-displays HMD).

Das Bildaufnahmegerät (1) ist modular aufgebaut und enthält zwei spiegelbildlich gleich aufgebaute Stereomodule R und L für den rechten bzw. linken Stereokanal. Das Stereomodul R enthält ein Objektiv L1 zur Erfassung eines engen Sehfelds (NFOV) mit der Visierlinie 111R und unmittelbar daneben angeordnet ein zweites Objektiv L2 zur Erfassung eines weiten Sehfeldes (WFOV), dessen Visierlinie 121R in dem Sinne der Visierlinie 111R des Objektivs L1 nahezu gleich ist, daß im typischen Abstandsbereich der erfaßbaren Objekte die Visierlinien 111R, 121R überlappen und nur bedingt durch die Nebeneinander-Anordnung der beiden Objektive L1, L2 voneinander abweichen. Mit Spiegeln können die Visierlinien der beiden Sehfelder (NFOV, WFOV) jedoch auch exakt überlagert werden, allerdings mit Lichtverlusten und Bauaufwand.

Den Objektiven L1, L2 sind Umlenkspiegel M1, M2, M3 nachgeordnet, welche im Zusammenwirken mit dem Chopper Chl, der ein über gleiche Sektoren transparentes bzw. lichtundurchlässig reflektierendes Chopperrad aufweist, die beiden Strahlengänge 11R des Objektivs L1 und 12R des Objektivs L2 zeitlich abwechselnd auf einen gemeinsamen Strahlengang umlenken.

Das zweite Stereomodul L ist spiegelbildlich zum beschriebenen aufgebaut und enthält die Objektive L3, L4 mit Visierlinien 111L, 121L und Strahlengängen 11L, 12L, Umlenkspiegel M4, M5, M6 und Chopper Ch2.

Bei Verzicht auf die Stereodarstellung genügt ein solches Modul R, dessen Ausgang direkt einer 2D-Detektoreinheit (13) zugeführt wird.

Mit zwei Stereomodulen R, L ist jedoch noch eine Baugruppe mit Spiegeln M7, M8, M9, Linsengruppen L5, L6 und einem dritten Chopper Ch3 mit gleichen, transparenten bzw. lichtundurchlässig reflektierenden Sektoren notwendig, welche die Strahlengänge der beiden Stereomodule R, L zeitlich abwechselnd einem gemeinsamen Strahlengang überlagert, der von der 2D-Detektoreinheit (13) empfangen wird.

Die Chopper Ch1, Ch2, Ch3 sind dabei so ausgebildet und werden hinsichtlich Drehzahl und Phasenlage des Chopperrades durch die Synchronisationseinheit (21) der Bildverarbeitungseinrichtung (2) so gesteuert, daß periodisch abfolgend die Strahlengänge 11R, 12R, 11L, 12L der 2D-Detektoreinheit (13) zugeführt werden und jeweils die anderen blockiert sind.

Die 2D-Detektoreinheit (13) ist, wie bei Wärmebildgeräten (FLIR) verbreitet, mit einem Zeilendetektor (132) bestehend aus Infrarot-Fotodetektoren und einer Scanningeinrichtung (131) für den Spaltenscan aufgebaut. Der Zeilendetektor (132) hat die volle Zeilenzahl, die insgesamt erfaßt wird. Damit kann eine opto-mechanische Zeilensprungeinrichtung für Halbbilddetektoren eingespart werden und es kann auf eine zusätzliche Unterteilung der Bildaufnahme (in dann 8 Schritte) verzichtet werden. Mit diesen Zusatzeinrichtungen kann jedoch auch ein Zeilendetektor mit halber Zeilenzahl verwendet werden.

Alternativ kann die 2D-Detektoreinheit (13) aus einem zweidimensionalen Fotodetektorarray, z.B. in CCD-Technik, bestehen.

Die 2D-Detektoreinheit (13) wird ebenfalls durch die Synchronisationseinheit (21) zeitlich gesteuert und mit der periodischen Umschaltung der Strahlengänge 11R, 12R, 11L, 12L synchronisiert. Enthalten ist in der 2D-Detektoreinheit (13) auch ein Scan-Converter (133), der die Bilddaten in Signale nach bekannten Video-Standards umwandelt. Die Aufnahme der Bilder und ihre Ausgabe durch die 2D-Detektoreinheit (13) erfolgt typisch mit einer Frequenz von 50 Hz. Somit ist die Folgefrequenz für jeden der vier Kanäle (enges (NFOV) und weites (WFOV) Sehfeld für beide Stereokanäle R, L) 12,5 Hz.

Die Videosignale der 2D-Detektoreinheit (13) werden der Bildverarbeitungseinrichtung (2) zugeführt. Diese enthält neben der alles steuernden Synchronisationseinheit (21) eine Bildkompressionseinheit (22), eine Bildexpansionseinheit (23), für jeden Stereokanal R, L zwei Vollbildspeicher AR, BR und AL, BL, sowie mehrere Umschalter, die von der Synchronisationseinheit (21) gesteuert werden.

In einem ersten Zeitintervall von 1/50 Sekunde wird durch die Chopper Ch1 und Ch3 das Bild des engen Sehfelds NFOV des rechten Stereokanals (R) der 2D-Detektoreinrichtung (13) zugeführt und das erzeugte Videosignal wird der Bildverarbeitungseinrichtung (2), der Bildkompressionseinrichtung (22) und anschließend dem ersten Vollbildspeicher AR des rechten Stereokanals (R) zugeführt. Dort wird es dem zentralen Bildbereich 31R des Monitors 3R zugeordnet abgespeichert. Gleichzeitig werden die zuvor aufgenommenen Inhalte der zweiten Vollbildspeicher BR und BL den Monitoren 3R, 3L zugeführt.

In einem zweiten Zeitintervall wird durch die Chopper Ch1 und Ch3 das Bild des weiten Sehfelds WFOV des rechten Stereokanals (R) der 2D-Detektoreinrichtung (13) zugeführt und das erzeugte Videosignal wird der Bildverarbeitungseinrichtung (2) der Bildexpansionseinrichtung (23) zugeführt und anschließend dem ersten Vollbildspeicher AR des rechten Stereokanals (R) zugeführt. Dort wird es dem Randbereich 32R des Monitors 3R zugeordnet abgespeichert. Danach liegt im Vollbildspeicher AR ein Bild der Szene vor, das den rechten Stereokanal (R) wiedergibt und in seinem zentralen Bildbereich 31R erhöhte Auflösung und Rauschunterdrückung aufweist, wobei der Randbereich übergangslos im gleichen Maßstab mit dargestellt ist.

In einem dritten und vierten Zeitintervall wird in entsprechender Weise für den linken Stereokanal (L) das enge NFOV und das weite WFOV Sehfeld erfaßt und im Vollbildspeicher AL abgespeichert. Weiterhin werden die Inhalte der Vollbildspeicher BR und BL den Monitoren 3R, 3L zugeführt.

In den fünften bis achten Zeitintervallen wird das gleiche wiederholt, nun wird aber in die Vollbildspeicher BR und BL abgespeichert und die zuvor in den Vollbildspeichern AR und AL erfaßten neuen Bilder werden den Monitoren 3R, 3L zugeführt. Danach wiederholt sich der beschriebene Vorgang periodisch.

Das Maß der Kompression (22) bzw. Expansion (23) der Bilder des engen NFOV bzw. weiten WFOV Sehfelds wird bestimmt zum einen durch das Verhältnis der Sehfeldwinkel und zum anderen durch das Verhältnis der von der 2D-Detektoreinrichtung (13) erfaßten Pixelzahl zur von den Monitoren 3R, 3L dargestellten Pixelzahl.

Mit einem Zeilendetektor (132) mit 576 Zeilen und einem Monitor 3R, 3L nach europäischer Fernsehnorm sind die erfaßte und dargestellte Pixelzahl gleich, die Bildexpansionseinrichtung (23) überträgt im Maßstab 1:1 und kann praktisch durch eine Signalleitung ersetzt werden.

Als weites Sehfeld WFOV ist für die Flugführung von Hubschraubern ein Maß von 30° vertikal mal 40° horizontal geeignet. Ein zentral darin gelegenes enges Sehfeld NFOV mit 7,5° mal 10° hat dann bei Aufnahme mit der gleichen 2D-Detektoreinheit (13) ein viertel Bildwinkel pro Pixel, das Maßstabsverhältnis ist 4:1.

Mit einem Zeilendetektor (132) mit 576 Zeilen und einem Monitor 3R, 3L von doppelter Zeilenzahl bzw. vierfacher Pixelzahl (Grafikdisplay) kann man vorteilhaft in der Bildkompressionseinrichtung (22) das Bild des engen Sehfelds NFOV auf den Maßstab 1:2 komprimieren und für den Randbereich das Bild des weiten Sehfelds WFOV in der Bildexpansionsvorrichtung (23) mit bekannten Verfahren auf den Maßstab 2:1 expandieren. Beide Teilbilder sind dann maßstabsgleich. Das dargestellte Bild des engen Sehfelds NFOV nutzt die gegenüber der dargestellten Pixelzahl größere Pixelzahl der 2D-Detektoreinrichtung (13) zur Rauschunterdrückung durch Integration.

## Patentansprüche

1. Bildwiedergabesystem mit
- einem Bildaufnahmegerät (1), welches einen optischen Kanal (11R; 11L) mit engem Sehfeld (NFOV) und einen weiteren optischen Kanal (12R; 12L) mit weitem Sehfeld (WFOV) umfaßt, wobei die beiden optischen Kanäle (11R, 12R; 11L, 12L) eine nahezu gleiche Visierlinie (111R, 121R; 111L, 121L) aufweisen,
- einer Bildverarbeitungseinrichtung (2) und
- einer Bilddarstellungseinrichtung (3R, 3L), die simultan Bildteile (31R, 32R; 31L, 32L) beider optischer Kanäle (11R, 12R; 11L, 12L) maßstabsgleich und zentriert zu einem Bild vereinigt darstellt,
dadurch gekennzeichnet,
- daß das Bildaufnahmegerät (1) einen gemeinsamen Detektor (13) für die beiden optischen Kanäle (11R, 12R; 11L, 12L) enthält und
- daß die Bildverarbeitungseinrichtung (2) eine Bildkompressionseinrichtung (22) für die dem optischen Kanal (11R; 11L) mit engem Sehfeld (NFOV) zugeordneten Bilddaten umfaßt.

2. Bildwiedergabesystem nach Anspruch 1, dadurch gekennzeichnet, daß das Bildaufnahmegerät (1) als Wärmebildaufnahmegerät (FLIR) ausgebildet ist.

3. Bildwiedergabesystem nach mindestens einem der Ansprüche 1 oder 2, dadurch gekennzeichnet, daß das Bildaufnahmegerät (1) eine Scanningeinrichtung (131) und einen Zeilendetektor (132) enthält.

4. Bildwiedergabesystem nach mindestens einem der Ansprüche 1, 2 oder 3, dadurch gekennzeichnet, daß das Bildaufnahmegerät (1) die zwei optischen Kanäle (11R, 12R; 11L, 12L) zeitlich abwechselnd detektiert.

5. Bildwiedergabesystem nach mindestens einem der Ansprüche 1-4, dadurch gekennzeichnet, daß es für stereoskopische Aufnahme und Wiedergabe ausgebildet ist und dafür für jeden der zwei Stereokanäle (R, L) zwei optische Kanäle (11R, 12R; 11L, 12L) unterschiedlicher Sehfelder (NFOV, WFOV) vorhanden sind.

6. Bildwiedergabesystem nach den Ansprüchen 3, 4 und 5, dadurch gekennzeichnet, daß nur eine Scanningeinrichtung (131) und nur ein Zeilendetektor (132) zeitlich abwechselnd die zwei (Stereo) mal zwei (NFOV, WFOV) Kanäle (11R, 12R; llL, 12L) detektieren.

7. Bildwiedergabesystem nach mindestens einem der Ansprüche 3-6, dadurch gekennzeichnet, daß nur eine Scanningeinrichtung (131) vorhanden ist und daß diese nach einer Strahlvereinigungseinrichtung (M1 - M9, Ch1 - Ch3) für die verschiedenen optischen Kanäle (11R, 12R; 11L, 12L) der unterschiedlichen Sehfelder (NFOV, WFOV) bzw. gegebenenfalls der beiden Stereokanäle (R, L) angeordnet ist.

8. Bildwiedergabesystem nach mindestens einem der Ansprüche 3-7, dadurch gekennzeichnet, daß der Zeilendetektor (132) so viele Detektorelemente hat, wieviele Zeilen insgesamt erfaßt werden, und daß keine optomechanische Einrichtung zur Erzeugung eines Zeilensprungs vor dem Zeilendetektor (132) angeordnet ist.

9. Verfahren zur Erzeugung einer Bilddarstellung einer Szene mit einem zentralen Bereich erhöhter Auflösung und/oder reduzierten Rauschens und einheitlichem Maßstab, bei dem die Szene von zwei Optiken (L1, L2; L3, L4) mit nahezu gleicher Visierlinie (111R, 121R; 111L, 121L) und einem engen (NFOV) und einem weiten (WFOV) Sehfeld erfaßt wird, deren erfaßtes Bild zeitlich abwechselnd einem Bilddetektor (13) mit bestimmter Pixelzahl zugeführt wird und die vom Bilddetektor (13) gelieferten Bilder für das enge Sehfeld (NFOV) unter Berücksichtigung aller erfaßten Pixel komprimiert und/oder für das weite Sehfeld (WFOV) expandiert werden, so daß danach beide Bilder die Szene in gleichem Maßstab enthalten, und bei dem in einem ersten Vollbildspeicher (AR, AL) beide Bilder derart abgespeichert werden, daß in Bildbereichen, die von beiden Optiken mit dem engen und dem weiten Sehfeld (NFOV, WFOV) erfaßt werden, nur die Bilddaten vom engen Sehfeld (NFOV) gespeichert werden; bei dem die Bilddaten aus dem ersten Vollbildspeicher (AR, AL) als Videosignal ausgelesen werden und gleichzeitig die neuen Bildsignale in einem zweiten Bildspeicher (BR, BL) abgespeichert werden, dies ständig alternierend, und bei dem die Videosignale mit einer Bilddarstellungseinrichtung (3R, 3L) ausgegeben werden.

10. Verfahren nach Anspruch 9, dadurch gekennzeichnet, daß eine Stereoaufnahme und Stereowiedergabe mit zwei Paar Optiken (R, L), zwei Paar Vollbildspeichern (AR, BR; AL, BL) und zwei Bilddarstellungseinrichtungen (3R, 3L) realisiert ist, wobei die Stereoaufnahme alternierend mittels des einen Bilddetektors (13) erfolgt.

11. Verwendung eines Bildwiedergabesystems nach mindestens einem der Ansprüche 1-8 oder eines Verfahrens nach Anspruch 9 oder 10 bei einem Sichtgerät, insbesondere Nachtsichtgerät, für Fahrzeugführer, insbesondere Piloten von Hubschraubern oder Flugzeugen.

## Claims

1. Image reproduction system with
- an image acquisition device (1) which comprises an optical channel (11R; 11L) with a narrow field of view (NFOV) and another optical channel (12R; 12L) with a wide field of view (WFOV), with the two optical channels having almost the same line of sight (111R, 121R; 111L, 121L);
- an image processing device (2) and
- an image display device (3R, 3L) which simultaneously displays image parts (31R, 32R; 31L, 32L) of both optical channels on the same scale and centers and combines them to form one image,
characterized by the fact
- that the image acquisition device (1) contains a joint detector (13) for the two optical channels (11R, 12R, 11L, 12L) and
- that the image processing device (2) comprises an image compression unit (22) for the image data assigned to the optical channel (11R; 11L) with a narrow field of view (NFOV).

2. Image reproduction system according to claim 1, with the image acquisition device (1) being a thermal imager (FLIR).

3. Image reproduction system according to at least one of the claims 1 or 2, with the image acquisition device (1) containing a scanning unit (131) and an linear detector array (132).

4. Image reproduction system according to at least one of the claims 1, 2 or 3, with the image acquisition device (1) detecting the two optical channels (11R, 12R; 11L, 12L) in alternation.

5. Image reproduction system according to at least one of the claims 1 - 4, with the system being designed for stereoscopic image acquisition and display and providing for this purpose two optical channels (11R, 12R; 11L, 12L) with different fields of view for each of the two stereo channels .

6. Image reproduction system according to the claims 3, 4 and 5, with only one scanning unit (131) and only one linear detector array (132) detecting in alternation the two (stereo) times two (NFOV, WFOV) channels (11R, 12R; 11L, 12L).

7. Image reproduction system according to at least one of the claims 3 - 6, with only one scanning unit (131) and with this scanning unit being located behind a beam fusion device (M1 - M9, Ch1 - Ch3) for the different optical channels (11R, 12R; 11L, 12L) of the different fields of view (NFOV, WFOV) or, if provided, the two stereo channels (R, L).

8. Image reproduction system according to at least one of the claims 3 - 7, with the linear detector array having as many detector elements as the total number of lines detected overall, and with no opto-mechanical device for the generation of an interlace being positioned in front of the linear detector array (132).

9. Procedure for generating an image display of a scene with a central area with enhanced resolution and/or reduced noise and a uniform scale, in which the scene is acquired by two optical systems (L1, L2; L3, L4) featuring almost identical lines of sight (111R, 121R; 111L, 121L) and a narrow (NFOV) and a wide (WFOV) field of view, with the image acquired by them being supplied in alternation to an image detector (13) with a specific number of pixels and with the images provided by the image detector (13) for the narrow field of view (NFOV) being compressed and/or being expanded for the wide field of view (NFOV) using all pixels covered, with the result that after this process the images contain the scene on the same scale, and in which the two images are stored in a first frame store (AR, AL) in such a way that only the image data provided by the narrow field of view (NFOV) are stored for image areas which are acquired by the two optical systems with the narrow and the wide field of view (NFOV, WFOV); in which the image data contained in the first frame store (AR, AL) is read out in the form of video signals and the new image signals are stored at the same time in a second frame store (BR, BL), with this process running in constant alternation, and in which the video signals are output using an image display device (3R, 3L).

10. Procedure according to claim 9, featuring stereo acquisition and stereo reproduction with two pairs of optical systems (R, L), two pairs of frame stores (AR, BR; AL, BL) and two image display devices (3R, 3L), with the stereo acquisition being performed in alternation using an image detector (13).

11. Use of an image reproduction system according to at least one of the claims 1 - 8 or a procedure according to claim 9 or 10 in a vision device, in particular a night vision device, for vehicle drivers and, in particular, for helicopter or aircraft pilots.

## Revendications

1. Système de reproduction d'images avec
- un enregistreur d'images (1) qui comprend une voie optique (11R; 11L) couvrant un champ de vision étroit (NFOV) et une autre voie optique (12R; 12L) couvrant un champ de vision large (WFOV), les deux voies optiques (11R, 12R; 11L, 12L) présentant sensiblement la même ligne de visée (111R, 121R; 111L, 121L),
- un dispositif de traitement d'images (2) et
- un dispositif de visualisation d'images (3R, 3L) qui réunit simultanément en une seule image des composantes d'images (31R, 32R; 31L, 32L) transmises par les deux voies optiques (11R, 12R 11L, 12L), en les visualisant de façon centrée et à la même échelle de reproduction,
caractérisé en ce que
- l'enregistreur d'images (1) renferme un détecteur (13) commun aux deux voies optiques (11R, 12R; 11L, 12L) et que
- le dispositif de traitement d'images (2) comprend un dispositif de compression d'image (22) pour les données d'image associées à la voie optique (11R; 11L) reproduisant le champ de vision étroit (NFOV).

2. Système de reproduction d'images selon la revendication 1, caractérisé en ce que l'enregistreur d'images (1) est réalisé sous la forme d'un enregistreur d'images thermiques (FLIR).

3. Système de reproduction d'images selon l'une au moins des revendications 1 ou 2, caractérisé en ce que l'enregistreur d'images (1) comporte un dispositif de balayage (131) et un détecteur linéaire (132).

4. Système de reproduction d'images selon l'une au moins des revendications 1, 2 ou 3, caractérisé en ce que l'enregistreur d'images (1) enregistre les signaux transmis par les deux voies optiques (11R, 12R; 11L, 12L) en alternance dans le temps.

5. Système de reproduction d'images selon l'une au moins des revendications 1 à 4, caractérisé en ce qu'il est conçu de façon à permettre l'enregistrement et la restitution stéréoscopiques et qu'il dispose à cet effet pour chacune des voies stéréoscopiques (R, L) de deux voies optiques (11R, 12R; 11L, 12L) couvrant des champs de vision différents (NFOV, WFOV).

6. Système de reproduction d'images selon les revendications 3, 4 et 5, caractérisé en ce qu'un seul dispositif de balayage (131) et un seul détecteur linéaire (132) captent successivement et en alternance les signaux en provenance des deux (stéréo) fois deux (NFOV, WFOV) voies (11R, 12R; 11L, 12L).

7. Système de reproduction d'images selon l'une au moins des revendications 3 à 6, caractérisé en ce qu'il ne comprend qu'un seul dispositif de balayage (131) et que celui-ci est disposé en aval d'un dispositif (M1 - M9, Ch1 - Ch3) réunissant les faisceaux des différentes voies optiques (11R, 12R; 11L, 12L) correspondant aux différents champs de vision (NFOV, WFOV) ou, le cas échéant, des deux voies stéréoscopiques (R, L).

8. Système de reproduction d'images selon l'une au moins des revendications 3 à 7, caractérisé en ce que le détecteur linéaire (132) a un nombre d'éléments détecteurs égal au nombre de lignes captées au total et qu'aucun dispositif opto-mécanique provoquant un entrelacement des lignes n'est disposé devant le détecteur linéaire (132).

9. Procédé servant à générer une image d'une scène avec une zone centrale de résolution accrue et/ou de bruit réduit, reproduite à une échelle uniforme, où la scène est captée par deux optiques (L1, L2; L3, L4) ayant sensiblement la même ligne de visée (111R, 121R, 111L, 121L) et présentant respectivement un champ de vision étroit (NFOV) et un champ de vision large (WFOV), dont les images sont transmises alternativement à un détecteur d'images (13) d'un nombre de pixels déterminé, les images fournies par le détecteur d'images (13) étant comprimées pour le champ de vision étroit (NFOV), en tenant compte de tous les pixels saisis et/ou expansées pour le champ de vision large (WFOV), de manière à ce que les deux images reproduisent ensuite la scène à la même échelle, où les images sont stockées dans une première mémoire d'image (AR, AL) de manière à ce que seules les données d'image correspondant au champ de vision étroit (NFOV) soient mises en mémoire dans les zones saisies par les deux optiques de champ étroit et de champ large (NFOV, WFOV), où les données d'image contenues dans la première mémoire d'image sont extraites en même temps que les nouveaux signaux d'image sont enregistrés dans une seconde mémoire d'image, opération qui est exécutée en alternance, et où les signaux vidéo sont restitués à l'aide d'un dispositif de visualisation d'images (3R, 3L).

10. Procédé selon la revendication 9, caractérisé en ce qu'un enregistrement et une visualisation stéréoscopiques sont réalisés à l'aide de deux paires d'optiques (R, L) de deux paires de mémoires d'image (AR, BR; AL, BL) et de deux dispositifs de visualisation d'images (3R, 3L), l'enregistrement stéréoscopique étant exécuté par alternance au moyen du seul détecteur d'images (13).

11. Mise en oeuvre d'un système de reproduction d'images selon l'une au moins des revendications 1 à 8 ou d'un procédé selon la revendication 9 ou 10 pour un appareil de vision et notamment pour un appareil de vision nocturne, destiné à des conducteurs de véhicules et plus particulièrement à des pilotes d'hélicoptères ou d'avions.
